# EUROPEAN PATENT SPECIFICATION

(11) **EP 1 796 284 B1**
(45) Date of publication and mention of the grant of the patent: **05.01.2011**
(21) Application number: 06791175.0
(22) Date of filing: 30.09.2006
(51) Int. Cl.: H04Q 11/04

(54) **SYSTEM, APPARATUS AND METHOD FOR TESTING LINE**
SYSTEM, VORRICHTUNG UND VERFAHREN ZUM VERBINDUNGSTESTEN
SYSTEME, APPAREIL ET PROCEDE DE TEST DE LIGNE

(30) Priority: 01.10.2005 CN 200510106121
(43) Date of publication of application: 13.06.2007
(73) Proprietor: Huawei Technologies Co., Ltd., Shenzhen, Guangdong Province 518129 (CN)
(72) Inventor: HU, Kejian Huawei Adm. Bldg., Shenzhen, Guangdong, 518129 (CN)
(74) Representative: Reinhard - Skuhra - Weise & Partner GbR
(86) International application number: PCT/CN2006/002589
(87) International publication number: WO 2007/038901

(56) References cited:
- CN-A- 1 571 521
- CN-A- 1 571 521
- CN-A- 1 592 238
- CN-A- 1 627 653
- CN-A- 1 627 653
- CN-A- 1 674 458

## Description

### Field of the Invention

The present invention relates to line test technology, and more particularly, to a method, apparatus and a system for testing a subscriber line.

### Background of the Invention

In a telephone network, a twisted pair is widely used to connect a subscriber's telephone to an exchange, and is also known as a subscriber line. The subscriber line, however, may not send voice and data signals normally as affected by various factors such as aging, dampness, man-made damage and so on. Therefore, a line test method is widely used to locate a failure point accurately and to repair the failure in time.

In order to enable a line test system to test all subscriber lines, exchanges, such as exchanges used in the Public Switch Telephone Network (PSTN) for normal voice services and Digital Subscriber Line Access Multiplexers (DSLAMs) for the accessing Digital Subscriber Lines (DLSs), are provided with test bus interfaces and communication protocol interfaces transmitting line-capturing control commands, both with line capture functions. The commen line test system used includes a line test server and a line test module. The line test server includes a line-capturing module, a test result analyzing module and a test equipment management module.

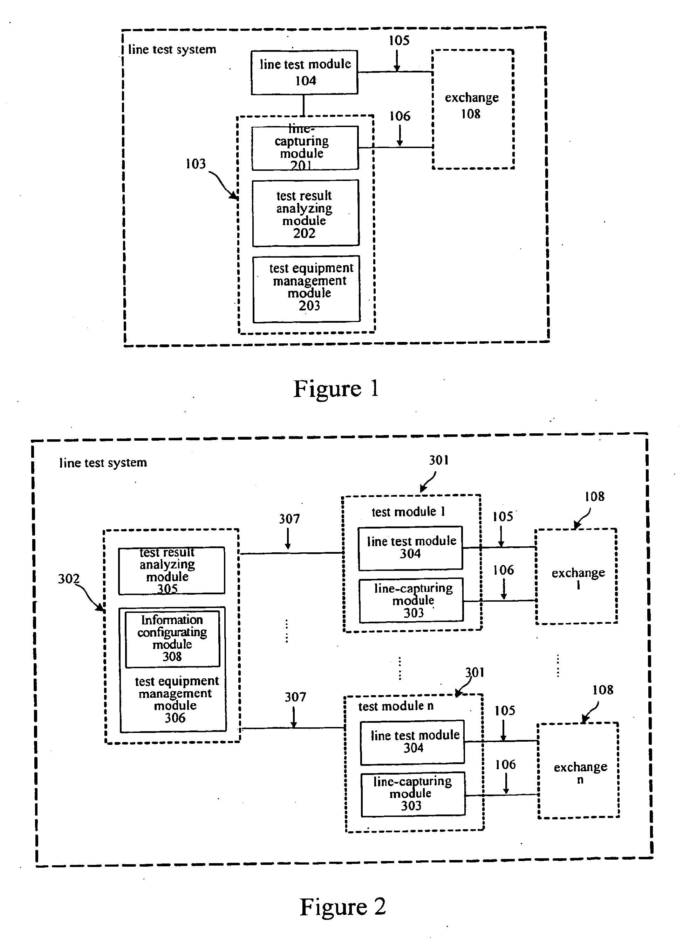

Figure 1 is a schematic diagram illustrating an architecture of an line test system in prior art. As shown in Figure 1, the line test system includes line test server 103, line test module 104 and exchange 108 with a line-capturing function. Line test module 104 tests a subscriber line captured by exchange 108 via test bus 105. The Line test server 103 includes a line-capturing module 201, a test result analyzing module 202, and a test equipment management module 203. The Line-capturing module 201 may send a bus-capturing control command and a bus-releasing control command to the exchange 108 via a RS-232 serial port. The test result analyzing module 202 may analyze a test result reported by the line test module. The test equipment management module 203 is utilized to manage line test module 104 and line-capturing module 201.

Based on the line test system description above, a method for testing a subscriber line is as follows.

The line-capturing module of the line test server sends a bus-capturing control command to the exchange via the communication protocol interface of the exchange. The exchange captures a test bus and connects a subscriber line to be tested to the test bus.

The test managing module of the line test server manages the line test module to start testing the subscriber line to be tested. The line test module returns a test result to the line test server.

The test result analyzing module of the line test server analyzes the test result.

The line-capturing module of the line test server sends a bus-releasing control command to the exchange via the communication protocol interface of the exchange. The exchange releases the test bus to disconnect the subscriber line from the test bus.

As such, a process of capturing a subscriber line and testing the subscriber line is ended, and the failure point on the subscriber line can be found.

However, in the above solution, the communication interface of the exchange is the RS-232 serial port, and the exchange communicates with the line-capturing module of the line test server via the RS-232 serial port. As well known, communication distance of the RS-232 serial port, however, is not long; while transmission distance between different exchange offices is long, which extremely exceeds the communication distance of the RS-232 serial port. Therefore, at least one line test server should be configured in one exchange office when a network is constructed. While those skilled in the art should understand that one line test server may be adapted to cooperate with multiple line test modules. The above solution is limited by the communication interface of the exchange, and therefore the line test server serves for one line test module, which wastes extremely resources of line test server and thus makes the cost of line test system high.

Document CN 1571521 A relates to a test system for testing a subscriber line in a case that the DSLAM does not support the line-capturing function. However, document CN 1571521 A does not provide a line test system that includes one line test server and is capable of serving more than one exchange in a case that the exchange is able to support the line-capturing function.

### Summary of the Invention

In view of the above, the embodiments of the present invention provide a method, apparatus and a system for testing a subscriber line to avoid the waste of resources of a line test server and saves high cost of a line test system.

A line test system may include:
a line test server, at least one test module, and at least one exchange;
the line test server may be configured to communicate with each of the at least one test module via remote communication interface, and is adapted to store a first relationship between a test bus number of the test bus and an identifier of a test module, send a line-capturing control command to a test module identified by the identifier of the test module corresponding to the test bus number of a test bus according the first relationship stored therein;
the test module is configured to communicate with at least one exchange, and is adapted to receive the line-capturing control command, adapt the line-capturing control command, send the line-capturing control command to an adapted exchange among the at least one exchange, test a subscriber line which is captured by the exchange, and send a test result to the line test server via the remote communication interface.

A method for testing a subscriber line may include:
storing by the line test server, an identifier of the test module according to the test bus number of the test bus and a first relationship between the test bus number and the identifer of the test module; and
sending, by the line test server, the bus-capturing control command to the test module identified by the identifier of the test module stored by the line test server,
adapting, by the test module, the line-capturing control command and sending the line-capturing control command adapted to an exchange;
testing, by the test module, a subscriber line captured by the exchange according to a line-capturing control command and
sending, by the test module, a test result to the line test server; wherein the line test server communicates with at least one test module via remote communication interface, each of the at least one test module communicates with at least one exchange.

It may be seen from the embodiments of the present invention that, the line-capturing module is set in the test module rather than in the line test server. Therefore, the test module includes a line test module and a line-capturing module and thus has the line test function and the line-capturing command adaptation function. The line test server provided in embodiments of the present invention communicates with the test module via a remote communication interface and the exchange provided in embodiments of the present invention communicates with the line-capturing module of the test module via the communication interface of the exchange. According to embodiments of the present invention, the line test server may send a control command remotely, thus a test module may be set in an exchange office correspondingly and one line test server may be set corresponding to multiple exchange offices, to make resources of the line test server fully utilized and to reduce the cost of line test system.

### Brief Description of the Drawings

Figure 1 is a schematic diagram illustrating an architecture of a line test system in prior art.
Figure 2 is a schematic diagram illustrating an architecture of a line test system according to an embodiment of the present invention.
Figure 3 is a flowchart of a method for testing a subscriber line in accordance with an embodiment of the present invention.

### Detailed Description of the Invention

The present invention will be described hereinafter with reference to embodiments and drawings.

As shown in Figure 2, a line test system provided in an embodiment of the present invention may include a exchange 108 with the line-capturing function, test module 301, and line test server 302. The test module 301 includes line-capturing module 303 and line test module 304, while the line test server 302 includes test result analyzing module 305 and test equipment management module 306.

The exchange 108 has the line-capturing function and a test bus interface and may be connected to line test module 304 via test bus 105. When receiving a bus-capturing control command sent by the line-capturing module 303, the exchange 108 connects a subscriber line to the test bus 105 and returns a bus-capturing result to the line-capturing module 303. When receiving a bus-releasing control command sent by the line-capturing module 303, exchange 108 disconnects the subscriber line tested from the test bus 105, and connects the subscriber line tested to a subscriber circuit. In this embodiment, the exchange with the line-capturing function may be an exchange used in PSTN or may be a DSLAM.

The test module 301 communicates with the line test server 302 via a remote communication interface 307. The remote communication interface 307 may be any interfaces supporting remote communications such as a 10M Ethernet interface or a 100 M Ethernet interface. When the test module 301 receives the line-capturing control command from the line test server 302, that is, when the line-capturing module 303 of the test module 301 receives the line-capturing control command, the line-capturing module 303 is activated. When the test module 301 receives a test command from the line test server 302, that is, when the line test module 304 of the test module 301 receives the test command, the line test module 304 is activated.

The Line-capturing module 303 is connected to the exchange corresponding to the test module to which the line-capturing module 303 belongs, via communication interface 106 of the exchange. The communication interface 106 of the exchange is the RS-232 serial port in this embodiment. Adaptation information of the communication interface of the exchange is pre-set in the line-capturing module 303. When receiving a line-capturing control command, including the bus-capturing control command and bus releasing control command, from the line test server 302, the line-capturing module 303 adapts the line-capturing control command according to the pre-set adaptation information, and sends the line-capturing command adapted to the exchange connected to line-capturing module 303. In this embodiment, the line-capturing module 303 communicates with the exchange corresponding to the line-capturing module 303 via the RS-232 serial port. In other embodiments, the line-capturing module 303 may communicate with the exchange via other dedicated interfaces of the exchange, such as relay interfaces or subscriber line interfaces. It is needed, however, to pre-set configuration information of these interfaces in the line-capturing module 303. According to the configuration information of these interfaces, the bus-capturing control command or the bus-releasing control command is adapted to a command which may be sent on these interfaces. And the commands adapted may be sent through these interfaces.

The line test module 304 connects to the test bus interface of the exchange 108 via test bus 105. When receiving the test command from the line test server 302, the line test module 304 tests the subscriber line captured by the exchange via the test bus 105, and returns the test result to the test result analyzing module 305 of the line test server 302. The tested subscriber line captured is a subscriber line connected to the test bus 105.

The test equipment management module 306 is used to send the bus-capturing control command to the test module 301 during the test, send the test command to test module 301 upon receiving from test module 301 a message indicating that the subscriber line is successfully captured, and send the bus-releasing control command to test module 301 after the test is ended.

In embodiments of the present invention, one line test server 302 may correspond to one or more test modules 301. When sending the line-capturing control command or the test command, the test equipment management module 306 should determine that the command may be sent to which one of the test modules. Therefore, in an embodiment of the present invention, the test equipment management module 306 may further include an information configurating unit 308 for storing a relationship between a test bus number of test bus 105 and an identifier of the test module 301, receiving an inquiry command which carries the test bus number and is sent by the line test server 302, and returning the identifier of the test module corresponding to the test bus number carried in the inquiry command. The line-capturing control command or test command in embodiments of the present invention carries the test bus number which is used in the current test. When sending the line-capturing control command or the test command, the test equipment management module sends an inquiry instruction to the information configurating unit 308 to find the identifier of the test module corresponding to the test bus number. After the information configurating unit 308 returns an inquiry result, the test equipment management module 306 sends the line-capturing control command or the test command to the test module identified by the identifier of the test module.

The test result analyzing module 305 receives the test result returned by test module 301, and analyzes the test result to obtain the failure status of the subscriber line, which is favourable for the follow-on failure removing. According to an embodiment of the present invention, one test module may be set corresponding to one exchange office in the line test system. The exchange office may include one or more exchanges. The exchanges in a same exchange office usually are located in a same room, thus the line-capturing module of the test module may communicate with multiple exchanges in the exchange office via the communication interfaces of the exchanges. Meanwhile, the line test module of the test module may connect to multiple exchanges via the test bus to perform a line test. Since the line test server communicates with the test module via a remote communication interface, the line test server may be set at the place far from the exchange office, and correspondingly connected to two or more test modules. Thus, resources of a line test server are fully utilized according to the solution provided in embodiments of the present invention and number of line test servers in the line test system is reduced.

The embodiments of the present invention also discloses a method for testing a subscriber line and the method may include the following processes.

A line test server sends a bus-capturing control command to a test module to request for performing bus capturing operations. The test module activates a line-capturing module to adapt the bus-capturing control command and sends the bus-capturing control command adapted to an exchange to which the subscriber line to be tested belongs. The exchange performs bus capturing operations.

The line test server manages the test module to test the subscriber line captured.

The line test server sends a bus-releasing control command to the test module to request for performing bus releasing operations. The test module activates the line-capturing module to adapt the bus-releasing control command and sends the adapted bus-releasing control command to the exchange to which the subscriber line tested belongs. The exchange performs bus releasing operations.

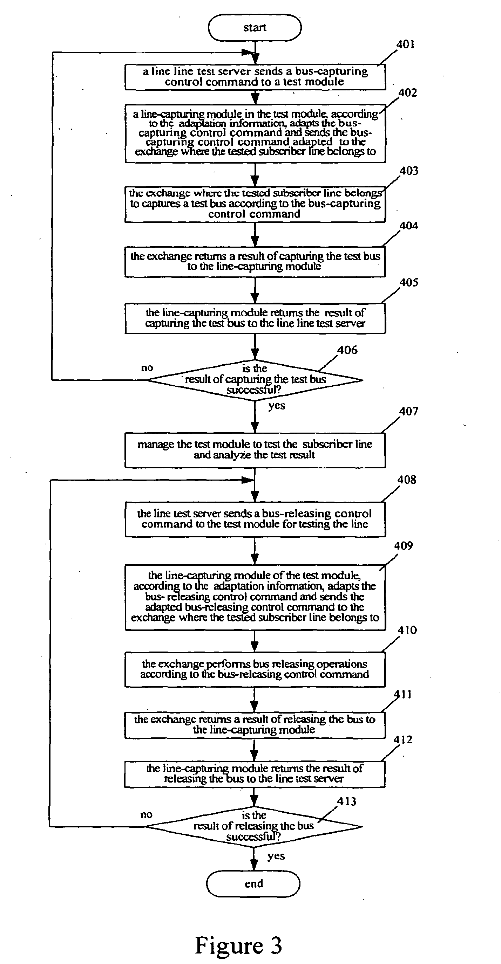

As shown in Figure 3, a method for testing a line in accordance with an embodiment of the present invention may include the following processes.

Step 401: a line test server sends a bus-capturing control command to a test module, that is, sends a bus-capturing control command to a test module to perform bus capturing operations. The bus-capturing control command may carry a telephone number of a subscriber line to be tested, a test bus number, and a test mode.

A first relationship between the test bus number and an identifier of the test module is pre-set in the line test server. During the line test, the line test server finds the identifier of the test module corresponding to a test bus to be tested according to the first relationship, and sends the bus-capturing control command to the test module identified by the identifier found.

Step 402: after receiving the bus-capturing control command, the test module sends the bus-capturing control command to the line-capturing module, activates the line-capturing module to adapt the bus-capturing control command according to adaptation information pre-configured and sends the bus-capturing control command adapted to an exchange to which the subscriber line to be tested belongs.

The adaptation information includes a second relationship between the telephone number of the subscriber line to be tested and the exchange to which the subscriber line to be tested belongs, and a thrid relationship between the exchange and a communication protocol used by the exchange. A procedure of adapting and sending the bus-capturing control command may include these processes. Inquire the second relationship according to the telephone number of the subscriber line to be tested in the bus-capturing control command to determine the exchange to which the tested subscriber line belongs, determine the communication protocol applicable for the exchange according to the third relationship, adapt the bus-capturing control command according to the communication protocol, and send the bus-capturing control command adapted to the exchange to which the subscriber line to be tested belongs. In this embodiment, the line-capturing module communicates with the exchange via the RS-232 serial port. Therefore, the bus-capturing control command is adapted according to the communication protocol used by the RS-232 serial port and is sent to the exchange to which the subscriber line to be tested belongs.

Step 403: the exchange captures the test bus according to the bus-capturing control command.

Determine the subscriber line to be tested according to the telephone number of the subscriber line in the bus-capturing contorl command, and connect the subscriber line to be tested to the test bus by using the test mode in the bus-capturing control command. The test bus is the one indicated by the test bus number in the bus-capturing control command.

Step 404: after performing the bus capturing operations, the exchange returns a bus-capturing result to the line-capturing module. The bus-capturing result includes a bus-capturing success message or a bus-capturing failure message.

Step 405: the line-capturing module returns the bus-capturing result to the line test server.

The line-capturing module may adapt the bus-capturing result and send the bus-capturing result adapted to the line test server according to the communication protocol used by the line test server. The communication protocol used by the line test server may be a remote communication interface protocol between the line test server and the test module. In this embodiment, the protocol is the 10M/100M Ethernet interface protocol. In other embodiments of the present invention, the communication protocol applicable for the line test server may be other communication protocols.

Step 406: the line test server determines whether the bus-capturing operation is successful or not according to the bus-capturing result adapted. If the bus-capturing operation is successful, Step 407 may be performed. If the bus-capturing operation is failed, return to Step 401.

Step 407: the line test server sends a test command to the test module to which the line-capturing module belongs. After receiving the test command, the test module activates the line test module to test the subscriber line captured, and returns a test result to the line test server for analyzing the test result.

If the test is ended, or when the line test server receives a test terminating command, the following processes may be performed.

Step 408: the line test server sends a bus-releasing control command to the test module which implements the line test, that is, sends a bus-releasing control command to the test module to perform bus-releasing operations. The bus-releasing control command at least includes the telephone number of the subscriber line tested and the test bus number. In an embodiment of the present invention, one line test server may correspond to multiple test modules. Therefore, during the line release, the line test server finds the identifier of the test module corresponding to the test bus to be released according to the first relationship, and sends the bus-releasing control command to the test module identified by the identifier.

Step 409: after receiving the bus-releasing control command, the test module sends the bus-releasing control command to the line-capturing module, activates the line-capturing module to adapt the bus-releasing control command according to the adaptation information pre-configured, and sends the bus-releasing control command to the exchange to which the subscriber line tested belongs.

The procedure of adapting and sending the bus-releasing control command may include these processes. Inquire the second relationship according to the telephone number of the subscriber line tested in the bus-releasing control command to determine the exchange to which the subscriber line tested belongs, determine the communication protocol applicable for the exchange according to the third relationship, adapt the bus-releasing control command according to the communication protocol, and send the bus-releasing control command to the exchange to which the subscriber line tested belongs. The process of adapting the bus-releasing control command and sending the bus-releasing control command adapted to the exchange to which the subscriber line tested belongs are performed by adopting communication protocol used by the RS-232 serial port in this embodiment.

Step 410: the exchange to which the tested subscriber line belongs releases the test bus according to the bus releasing control command.

Determine which one of subscriber lines tested and which one of test buses may be released according to the telephone number of the subscriber line tested and the test bus number in the bus-releasing control command. After the subscriber line tested and the test bus are determined, the connection between the subscriber line tested and the test bus is disconnected. The subscriber line tested may be connected to a subscriber circuit corresponding to the telephone number of the subscriber line tested.

Step 411: after performing bus releasing operations, the exchange returns to the line-capturing module a bus-releasing result, including a bus releasing success message or a bus releasing failure message.

Step 412: the line-capturing module returns the bus-releasing result to the line test server.

The line-capturing module should adapt the bus-releasing result according to the communication protocol applicable for the line test server and send the bus-releasing result to the line test server. The communication protocol applicable for the line test server is a remote communication interface protocol between the line test server and the test module. In this embodiment, the protocol is the 10M/100M Ethernet interface protocol. In other embodiments of the present invention, the communication protocol applicable for the line test server may be other communication protocols.

Step 413: the line test server determines whether the bus relasing operations are successful or not according to the bus-releasing result. If the bus relasing operations are successful, terminate the current procedure. If the bus relasing operations are failed, return to Step 408.

Though the present invention has been illustrated and described by some preferred embodiments, those skilled in the art should understand that various changes may be made in form and detail without departing from the scope of the present invention and therefore should be covered in the protection scope of the present invention defined by the appended claims.

## Claims

1. A line test system, comprising:
a line test server (302), at least one test module (301), and at least one exchange (108);
**characterized in that**
the line test server (302) is configured to communicate with each of the at least one test module (301) via a remote communication interface, and is adapted to store a first relationship between a test bus number of the test bus (105) and an identifier of a test module (301), send a line-capturing control command to a test module (301) identified by the identifier of the test module (301) corresponding to the test bus number of a test bus (105) according the first relationship stored therein; and
the test module (301), is configured to communicate with the at least one exchange (108), and is adapted to receive the line-capturing control command, adapt the line-capturing control command, send the line-capturing control command to an adapted exchange (108) among the at least one exchange (108), test a subscriber line captured by the exchange (108) via a test bus, and send a test result to the line test server (302) via the remote communication interface.

2. The system of claim 1, wherein the line-capturing control command comprises a telephone number of the subscriber line; and
the test module (301) is further configured to store a second relationship between the telephone number of the subscriber line and the exchange (108) and a third relationship between the exchange (108) and a communication protocol used by the exchange (108), determine the exchange (108) according to the telephone number of the subscriber line and the second relationship, and determine the communication protocol used by the exchange (108) according to the exchange (108) and the third relationship.

3. The system of claim 1 or 2, wherein
the test module (301) is further configured to receive a result of capturing the test bus from the exchange(108) and send the result of capturing the test bus to the line test server(302); and
the line test server (302) is further configured to re-send the line-capturing control command if determining that the process of capturing the subscriber line failed according to the result of capturing the test bus.

4. The system of any of claims 1 to 3, wherein the remote communication interface is a 10M/100M Ethernet interface.

5. The system of any of claims 1 to 4, wherein the test module (301) communicates with the exchange (108) via a RS-232 serial port, and the communication protocol used by the exchange (108) is a communication protocol adapted to the RS-232 serial port.

6. A method for testing a subscriber line, comprising:
storing, by the line test server (302), an identifier of the test module (301) according to the test bus number of the test bus and a first relationship between the test bus number and the identifer of the test module (301); and
sending, by the line test server (302), the bus-capturing control command to the test module (301) identified by the identifier of the test module (301) stored by the line test server (302),
adapting (402), by the test module (301), the line-capturing control command and sending the line-capturing control command to an adapted exchange (108); and
testing (407), by the test module (301), a subscriber line captured by the exchange (108)according to the line-capturing control command; and
sending, by the test module (301), a test result to the line test server(302);
wherein the line test server (302) communicates with at least one test module (301) via remote communication interface, each of the at least one test module (301) communicates with at least one exchange (108).

7. The method of claim 6, wherein the line-capturing control command comprises a telephone number of the subscriber line;
the process of adapting the line-capturing control command and sending the line-capturing control command adapted to the exchange (108) comprises:
obtaining the exchange (108) according to the telephone number of the subscriber line and a second relationship between the telephone number of the subscriber line and the exchange (108);
obtaining a communication protocol applicable for the exchange (108) according to the exchange (108) and a third relationship between the exchange (108) and the communication protocol applicable for the exchange (108); and
adapting the bus-capturing control command by using the communication protocol obtained and sending the bus-capturing control command adapted to the exchange (108).

8. The method of claim6 or7, further comprising:
receiving, by the test module (301), a result of capturing the test bus from the exchange (108);
adapting the result of capturing the test bus and sending the result of capturing the test bus adapted ; and
sending the result of capturing the test bus adapted to the line test server (302).

9. The method of claim 8, further comprising:
determining, by the line test server (302), whether the process of capturing the subscriber line succeeds, and
re-sending the line-capturing control command if the process of capturing the subscriber line fails.

## Patentansprüche

1. Leitungsprüfsystem, umfassend:
einen Leitungsprüfserver (302), mindestens ein Prüfmodul (301) und mindestens eine Vermittlungsstelle (108);
**dadurch gekennzeichnet, dass**
der Leitungsprüfserver (302) dafür ausgelegt ist, über eine Fernkommunikationsschnittstelle mit jedem des mindestens einen Prüfmoduls (301) zu kommunizieren,
und dafür ausgelegt ist, eine erste Beziehung zwischen einer Prüfbusnummer des Prüfbusses (105) und einer Kennung eines Prüfmoduls (301) zu speichern und einen Leitungserfassungs-Steuerbefehl zu einem Prüfmodul (301) zu senden, das durch die Kennung des Prüfmoduls (301) identifiziert wird, die gemäß der ersten darin gespeicherten Beziehung der Prüfbusnummer eines Prüfbusses (105) entspricht; und
das Prüfmodul (301) dafür ausgelegt ist, mit der mindestens einen Vermittlungsstelle (108) zu kommunizieren, und dafür ausgelegt ist, den Leitungserfassungs-Steuerbefehl zu empfangen, den Leitungserfassungs-Steuerbefehl anzupassen, den Leitungserfassungs-Steuerbefehl zu einer angepassten Vermittlungsstelle (108) unter der mindestens einen Vermittlungsstelle (108) zu senden, eine durch die Vermittlungsstelle (108) über einen Prüfbus erfasste Teilnehmerleitung zu prüfen und ein Prüfergebnis über die Fernkommunikationsschnittstelle zu dem Leitungsprüfserver (302) zu senden.

2. System nach Anspruch 1, wobei der Leitungserfassungs-Steuerbefehl eine Telefonnummer der Teilnehmerleitung umfasst; und
das Prüfmodul (301) ferner dafür ausgelegt ist, eine zweite Beziehung zwischen der Telefonnummer der Teilnehmerleitung und der Vermittlungsstelle (108) und eine dritte Beziehung zwischen der Vermittlungsstelle (108) und einem von der Vermittlungsstelle (108) verwendeten Kommunikationsprotokoll zu speichern, die Vermittlungsstelle (108) gemäß der Telefonnummer der Teilnehmerleitung und der zweiten Beziehung zu bestimmen und das von der Vermittlungsstelle (108) verwendete Kommunikationsprotokoll gemäß der Vermittlungsstelle (108) und der dritten Beziehung zu bestimmen.

3. System nach Anspruch 1 oder 2, wobei
das Prüfmodul (301) ferner dafür ausgelegt ist, ein Ergebnis des Erfassens des Prüfbusses von der Vermittlungsstelle (108) zu empfangen und das Ergebnis des Erfassens des Prüfbusses zu dem Leitungsprüfserver (302) zu senden; und
der Leitungsprüfserver (302) ferner dafür ausgelegt ist, den Leitungserfassungs-Steuerbefehl neu zu senden, wenn gemäß dem Ergebnis des Erfassens des Prüfbusses bestimmt wird, dass der Prozess des Erfassens der Teilnehmerleitung erfolglos geblieben ist.

4. System nach einem der Ansprüche 1 bis 3, wobei die Fernkommunikationsschnittstelle eine 10M/100M-Ethernet-Schnittstelle ist.

5. System nach einem der Ansprüche 1 bis 4, wobei das Prüfmodul (301) über einen seriellen RS-232-Port mit der Vermittlungsstelle (108) kommuniziert und das von der Vermittlungsstelle (108) verwendete Kommunikationsprotokoll ein an den seriellen RS-232-Port angepasstes Kommunikationsprotokoll ist.

6. Verfahren zum Prüfen einer Teilnehmerleitung, mit den folgenden Schritten:
Speichern einer Kennung des Prüfmoduls (301) durch den Leitungsprüfserver (302) gemäß der Prüfbusnummer des Prüfbusses und einer ersten Beziehung zwischen der Prüfbusnummer und der Kennung des Prüfmoduls (301); und
Senden des Buserfassungs-Steuerbefehls durch den Leitungsprüfserver (302) zu dem Prümodul (301), das durch die durch den Leitungsprüfserver (302) gespeicherte Kennung des Prüfmoduls (301) identifiziert wird,
Anpassen (402) des Leitungserfassungs-Steuerbefehls durch das Prüfmodul (301) und Senden des Leitungserfassungs-Steuerbefehls zu einer angepassten Vermittlungsstelle (108); und
Prüfen (407) einer durch die Vermittlungsstelle (108) erfassten Teilnehmerleitung durch das Prüfmodul (301) gemäß dem Leitungserfassungs-Steuerbefehl; und
Senden eines Prüfergebnisses durch das Prüfmodul (301) zu dem Leitungsprüfserver (302);
wobei der Leitungsprüfserver (302) über eine Fernkommunikationsschnittstelle mit mindestens einem Prüfmodul (301) kommuniziert, wobei jedes des mindestens einen Prüfmoduls (301) mit mindestens einer Vermittlungsstelle (108) kommuniziert.

7. Verfahren nach Anspruch 6, wobei der Leitungserfassungs-Steuerbefehl eine Telefonnummer der Teilnehmerleitung umfasst;
der Prozess des Anpassens des Leitungserfassungs-Steuerbefehls und des Sendens des angepassten Leitungserfassungs-Steuerbefehls zu der Vermittlungsstelle (108) folgendes umfasst:
Erhalten der Vermittlungsstelle (108) gemäß der Telefonnummer der Teilnehmerleitung und einer zweiten Beziehung zwischen der Telefonnummer der Teilnehmerleitung und der Vermittlungsstelle (108);
Erhalten eines für die Vermittlungsstelle (108) geltenden Kommunikationsprotokolls gemäß der Vermittlungsstelle (108) und einer dritten Beziehung zwischen der Vermittlungsstelle (108) und dem für die Vermittlungsstelle (108) geltenden Kommunikationsprotokoll; und
Anpassen des Buserfassungs-Steuerbefehls durch Verwenden des erhaltenen Kommunikationsprotokolls und Senden des angepassten Buserfassungs-Steuerbefehls zu der Vermittlungsstelle (108).

8. Verfahren nach Anspruch 6 oder 7, ferner mit den folgenden Schritten:
Empfangen eines Ergebnisses des Erfassens des Prüfbusses durch das Prüfmodul (301) von der Vermittlungsstelle (108);
Anpassen des Ergebnisses des Erfassens des Prüfbusses und Senden des angepassten Ergebnisses des Erfassens des Prüfbusses; und
Senden des angepassten Ergebnisses des Erfassens des Prüfbusses zu dem Leitungsprüfserver (302).

9. Verfahren nach Anspruch 8, ferner mit den folgenden Schritten:
Bestimmen durch den Leitungsprüfserver (302), ob der Prozess des Erfassens der Teilnehmerleitung erfolgreich ist, und
Neusenden des Leitungserfassungs-Steuerbefehls, wenn der Prozess des Erfassens der Teilnehmerleitung erfolglos bleibt.

## Revendications

1. Système de test de ligne, comprenant :
un serveur de test de ligne (302), au moins un module de test (301) et au moins un central (108) ;
**caractérisé en ce que**
le serveur de test de ligne (302) est configuré pour communiquer avec chacun de l'au moins un module de test (301) par l'intermédiaire d'une interface de communication à distance, et est adapté pour mémoriser une première relation entre un numéro de bus de test du bus de test (105) et un identifiant d'un module de test (301), envoyer une commande de contrôle de capture de ligne à un module de test (301) identifié par l'identifiant du module de test (301) correspondant au numéro de bus de test d'un bus de test (105) en fonction de la première relation mémorisée dans le serveur de test de ligne ; et
le module de test (301) est configuré pour communiquer avec l'au moins un central (108), et est adapté pour recevoir la commande de contrôle de capture de ligne, adapter la commande de contrôle de capture de ligne, envoyer la commande de contrôle de capture de ligne à un central adapté (108) parmi l'au moins un central (108), tester une ligne d'abonné capturée par le central (108) par l'intermédiaire d'un bus de test, et
envoyer un résultat de test au serveur de test de ligne (302) par l'intermédiaire de l'interface de communication à distance.

2. Système selon la revendication 1, dans lequel la commande de contrôle de capture de ligne comprend un numéro de téléphone de la ligne d'abonné ; et
le module de test (301) est configuré en outre pour mémoriser une deuxième relation entre le numéro de téléphone de la ligne d'abonné et le central (108) et une troisième relation entre le central (108) et un protocole de communication utilisé par le central (108), déterminer le central (108) en fonction du numéro de téléphone de la ligne d'abonné et la deuxième relation, et déterminer le protocole de communication utilisé par le central (108) en fonction du central (108) et de la troisième relation.

3. Système selon la revendication 1 ou 2, dans lequel
le module de test (301) est configuré en outre pour recevoir un résultat de capture du bus de test depuis le central (108) et envoyer le résultat de capture du bus de test au serveur de test de ligne (302) ; et
le serveur de test de ligne (302) est configuré en outre pour envoyer à nouveau la commande de contrôle de capture de ligne s'il détermine que le processus de capture de la ligne d'abonné a échoué en fonction du résultat de capture du bus de test.

4. Système selon l'une quelconque des revendications 1 à 3, dans lequel l'interface de communication à distance est une interface Ethernet 10M/100M.

5. Système selon l'une quelconque des revendications 1 à 4, dans lequel le module de test (301) communique avec le central (108) par l'intermédiaire d'un port série RS-232, et le protocole de communication utilisé par le central (108) est un protocole de communication adapté au port série RS-232.

6. Procédé de test d'une ligne d'abonné, comprenant :
la mémorisation, par le serveur de test de ligne (302), d'un identifiant du module de test (301), en fonction du numéro de bus de test du bus de test et d'une première relation entre le numéro de bus de test et l'identifiant du module de test (301) ; et
l'envoi, par le serveur de test de ligne (302), de la commande de contrôle de capture de bus au module de test (301) identifié par l'identifiant du module de test (301) mémorisé par le serveur de test de ligne (302) ;
l'adaptation (402), par le module de test (301), de la commande de contrôle de capture de ligne et l'envoi de la commande de contrôle de capture de ligne à un central adapté (108) ; et
le test (407), par le module de test (301), d'une ligne d'abonné capturée par le central (108) en fonction de la commande de contrôle de capture de ligne ; et
l'envoi, par le module de test (301), d'un résultat de test au serveur de test de ligne (302) ;
le serveur de test de ligne (302) communiquant avec au moins un module de test (301) par l'intermédiaire de l'interface de communication à distance, chacun de l'au moins un module de test (301) communiquant avec au moins un central (108).

7. Procédé selon la revendication 6, dans lequel la commande de contrôle de capture de ligne comprend un numéro de téléphone de la ligne d'abonné ;
le processus d'adaptation de la commande de contrôle de capture de ligne et d'envoi de la commande de contrôle de capture de ligne au central (108) comprend :
l'obtention du central (108) en fonction du numéro de téléphone de la ligne d'abonné et
d'une deuxième relation entre le numéro de téléphone de la ligne d'abonné et le central (108) ;
l'obtention d'un protocole de communication applicable au central (108) en fonction du central (108) et d'une troisième relation entre le central (108) et le protocole de communication applicable au central (108) ; et
l'adaptation de la commande de contrôle de capture de bus en utilisant le protocole de communication obtenu et l'envoi de la commande de contrôle de capture de bus adaptée au central (108).

8. Procédé selon la revendication 6 ou 7, comprenant en outre :
la réception, par le module de test (301), d'un résultat de capture du bus de test depuis le central (108) ;
l'adaptation du résultat de capture du bus de test et l'envoi du résultat de capture du bus de test adapté ; et
l'envoi du résultat de capture du bus de test adapté au serveur de test de ligne (302).

9. Procédé selon la revendication 8, comprenant en outre :
le fait de déterminer, par le serveur de test de ligne (302), si le processus de capture de la ligne d'abonné réussit ou non, et
l'envoi à nouveau de la commande de contrôle de capture de ligne si le processus de capture de la ligne d'abonné échoue.
